# EUROPÄISCHE PATENTANMELDUNG

(11) **EP 2 091 216 A1**
(43) Veröffentlichungstag der Anmeldung: **19.08.2009**
(21) Anmeldenummer: 08105769.7
(22) Anmeldetag: 11.11.2008
(51) Int. Cl.: H04M 1/725, H04M 11/04

(54) **Hausnotrufgerät**

(30) Priorität: 13.02.2008 DE 102008008849
(71) Anmelder: Robert Bosch GmbH, 70442 Stuttgart (DE)
(72) Erfinder: Herrmann, Falk, 82041, Oberhaching (DE); Thuersam, Markus, 2300, La Chaux-De-Fonds (CH); Theunissen, Peter, 71717, Beilstein (DE)

(57) **Zusammenfassung**

Die Erfindung betrifft ein Hausnotrufgerät zur Übertragung eines Notrufs über eine erste Kommunikationsvcrbindung (10-2, 20-2) an mindestens eine vorgegebene Notrufannahmestelle (2) mit einer Basisstation (10, 10') und mindestens einem Mobilteil (20, 20', 30), wobei die Basisstation (10, 10') über mindestens eine zweite Kommunikationsverbindung (20-10, 30-10) mit dem mindestens einen Mobilteil (20, 20', 30) kommuniziert, wobei der Notruf von der Basisstation und/oder von dem mindestens einen Mobiltcil (20, 20', 30) auslösbar ist, und wobei über die zweite Kommunikationsverbindung (20-10, 30-10) ein im Mobilteil ausgelöster Notruf oder andere Informationen zur Basisstation (10, 10') übertragbar sind. Erfindungsgemäß ist die erste Kommunikationsverbindung (10-2, 20-2) zwischen dem Hausnotrufgerät (1) und der mindestens einen vorgegebenen Notrufannahmestelle in Reaktion auf den ausgelösten Notruf rcdundant in mindestens zwei Telekommunikationsnetzen (3, 4) aufbaubar.

## Beschreibung

### Stand der Technik

Die Erfindung betrifft ein Hausnotrufgerät nach dem Oberbegriff des Patentanspruchs 1.

In der Offenlegungsschrift DE 197 34 594 A1 werden ein Verfahren zum Betreiben einer Hausnotrufanlage, ein Teilnehmerendgerät und eine Hausnotrufzentrale beschrieben. Das beschriebene Teilnehmerendgerät weist eine Empfangseinrichtung für den Empfang eines Notsignals und eine Schnittstelleneinrichtung für die Abgabe von Notrufsignalen über einen Netzanschluss eines Telefonnetzes auf. Das Teilnehmerendgerät empfängt in ersten zeitlichen Abständen Teilnehmerzustandsdaten, die eine Aufnahmevorrichtung wiederholt erfasst hat. Außerdem sendet das Teilnehmerendgerät in zweiten zeitlichen Abständen aus den Teilnehmerzustandsdaten abgeleitete Daten über den Netzanschluss eines Telefonnetzes an eine Netzteilnehmerstation. Das Teilnehmerendgerät kann in der Hausnotrufanlage zur Übertragung von Patientenzustandsdaten in Gestalt von Diagrammen über die Hausnotrufzentrale an einen betreuenden Arzt verwendet werden.

In der Offenlegungsschrift DE 199 19 683 A1 wird ein Telekommunikationsendgerät, insbesondere ein Mobilfunkgerät, beschrieben, das einen Betriebsmodus für eine automatische Notrufabsetzung vorsieht. Das beschriebene Telekommunikationsendgerät umfasst eine Sendevorrichtung, eine Eingabevorrichtung, insbesondere eine Tastatur, und eine Wiedergabevorrichtung, insbesondere einen Lautsprecher und/oder eine Anzeigevorrichtung. Bei dem Betriebsmodus für die automatische Notrufabsetzung erfolgt zu vorgegebenen Zeiten an der Wiedergabevorrichtung eine Signalisierung. Die Sendevorrichtung gibt ein Notrufsignal ab, wenn nicht innerhalb einer ersten Zeitspanne ab dem Beginn der jeweiligen Signalisierung eine Quittierung an der Eingabevorrichtung erfolgt. Erfolgt innerhalb der ersten Zeitspanne eine Quittierung, dann bricht die jeweilige Signalisierung ab. Nach Ablauf einer zweiten Zeitspanne nach der Quittierung, erfolgt eine erneute Signalisierung an der Wiedergabevorrichtung. Das Telekommunikationsendgerät wählt mindestens eine vorgegebene Rufnummer und gibt den Notruf über eine Basisstation und ein korrespondierendes Telekommunikationsnetz an bestimmte Teilnehmer ab, welche mit der mindestens einen vorgegebenen Rufnummer korrespondieren. Zusätzlich kann das Telekommunikationsendgerät den Notruf als ungerichtetes Funksignal mit einer vorgegebenen Frequenzlage abstrahlen, wobei das abgestrahlte Funksignal von korrespondierenden Empfängern empfangen werden kann.

Das erfindungsgemäße Hausnotrufgerät mit den Merkmalen des unabhängigen Patentanspruchs 1 hat demgegenüber den Vorteil, dass eine erste Kommunikationsverbindung zur Übertragung eines Notrufs zwischen dem Hausnotrufgerät und mindestens einer vorgegebenen Notrufannahmestelle in Reaktion auf den ausgelösten Notruf redundant in mindestens zwei Telekommunikationsnetzen aufgebaut werden kann. Dadurch wird in vorteilhafter Weise ermöglicht, dass im Falle einer Störung eines ersten Telekommunikationsnetzes die erste Kommunikationsverbindung zur Übertragung des ausgelösten Notrufs in einem zweiten Telekommunikationsnetz aufgebaut werden kann. Zudem umfasst das Hausrufnotgerät eine Basisstation und mindestens ein Mobilteil, wobei die Basisstation über mindestens eine zweite Kommunikationsverbindung mit dem mindestens einen Mobilteil kommuniziert und der Notruf von der Basisstation und/oder von dem mindestens einen Mobilteil ausgelöst werden kann. Die Basisstation verfügt beispielsweise über mindestens eine akustische und/oder manuelle Eingabeeinheit, die beispielsweise als Mikrofon, Notruftaste usw. ausgeführt ist, und mindestens eine akustische und/oder optische Ausgabeeinheit, die beispielsweise als Lautsprecher, Display usw. ausgeführt ist. Zudem kann eine Freisprechfunktion in die Basisstation implementiert werden. Das Mobilteil verfügt beispielsweise ebenfalls über mindestens eine akustische und/oder manuelle Eingabeeinheit, mindestens eine akustische und/oder optische Ausgabeeinheit und eine implementierte Freisprechfunktion. Ein im Mobilteil ausgelöster Notruf kann über die zweite Kommunikationsverbindung zur Basisstation übertragen werden. Über die zweite Kommunikationsverbindung können neben der Notrufübertragung auch Informationen von weiteren Funktionen wie Überwachung der Energieversorgung oder Ortung des Mobilteils übertragen werden.

Durch die in den abhängigen Ansprüchen aufgeführten Maßnahmen und Weiterbildungen sind vorteilhafte Verbesserungen des im unabhängigen Patentanspruch 1 angegebenen Hausnotrufgerätes möglich.

Besonders vorteilhaft ist, dass eine erste Schnittstelleneinheit des Hausnotrufgerätes den Aufbau der ersten Kommunikationsverbindung in einem ersten Telekommunikationsnetz beginnt, wobei eine zweite Schnittstelleneinheit des Hausnotrufgerätes in Reaktion auf eine Nichtzustandkommen der ersten Kommunikationsverbindung im ersten Telekommunikationsnetz den Aufbau der ersten Kommunikationsverbindung in einem zweiten Telekommunikationsnetz beginnt. Das erste Telekommunikationsnetz ist beispielsweise als Festnetz ausgeführt, wobei die erste Schnittstelleneinheit die erste Kommunikationsverbindung drahtgebunden in dem als Festnetz ausgeführten ersten Telekommunikationsnetz aufbaut. Das zweite Telekommunikationsnetz ist beispielsweise als Funknetz ausgeführt, wobei die zweite Schnittstelleneinheit die erste Kommunikationsverbindung drahtlos in dem als Funknetz ausgeführten zweiten Telekommunikationsnetz aufbaut. Somit versucht das Hausnotrufgerät in vorteilhafter Weise zuerst einen kostengünstigen Aufbau der ersten Kommunikationsverbindung in dem als Festnetz ausgeführten Telekommunikationsnetz, verfügt aber über die redundante Aufbaumöglichkeit der ersten Kommunikationsverbindung über das als Funknetz ausgeführte zweite Telekommunikationsnetz.

In Ausgestaltung des erfindungsgemäßen Hausnotrufgerätes können die erste Schnittstelleneinheit und die zweite Schnittstelleneinheit in der Basisstation angeordnet werden. Bei dieser Ausführungsform wird das Mobilteil beispielsweise am Körper mitgeführt und erlaubt in näherer Umgebung zur Basisstation, beispielsweise in einem Fangbereich zwischen ca. 250m bis 300m, über die Basisstation eine Notrufauslösung, wobei durch die Notrufauslösung eine Sprechverbindung zur Notrufannahmestelle aufgebaut werden kann.

In alternativer Ausgestaltung des erfindungsgemäßen Hausnotrufgerätes kann die erste Schnittstelleneinheit in der Basisstation angeordnet werden, und die zweite Schnittstelleneinheit kann im Mobilteil angeordnet werden. Bei dieser alternativen Ausführungsform kann die zweite Schnittstelleneinheit im Mobilteil blockiert werden, wenn das Mobilteil im Fangbereich der Basisstation angeordnet ist und eine zweite Kommunikationsverbindung zwischen dem Mobilteil und der Basisstation hergestellt werden kann. In diesem Fall gibt die Basisstation die zweite Schnittstelleneinheit zum Aufbau der ersten Kommunikationsverbindung nur frei, wenn der Aufbau der ersten Kommunikationsverbindung über die erste Schnittstelleneinheit in der Basisstation misslingt. Wenn das Mobilteil außerhalb des Fangbereichs der Basisstation angeordnet ist und keine zweite Kommunikationsverbindung zwischen dem Mobilteil und der Basisstation hergestellt werden kann, ist die zweite Schnittstelleneinheit im Mobilteil freigegeben und kann bei einer Notrufauslösung im Mobilteil die erste Kommunikationsverbindung aufbauen.

In weiterer Ausgestaltung des erfindungsgemäßen Hausnotrufgerätes kann die mindestens eine zweite Kommunikationsverbindung über eine drahtlose und/oder drahtgebundene Schnittstelleneinheit hergestellt werden. Zudem kann in der Basisstation eine Ladeeinheit angeordnet werden, welche eine Energieversorgungseinheit des mindestens einen Mobilteils über eine drahtlose und/oder drahtgebundene Energieversorgungsverbindung aufladen kann.

In weiterer Ausgestaltung des erfindungsgemäßen Hausnotrufgerätes umfasst das mindestens eine Mobilteil eine Ortungseinheit zur Bestimmung einer aktuellen geografischen Position. Die bestimmte aktuelle geografische Position kann mit dem ausgelösten Notruf über die ersten Kommunikationsverbindung direkt an die Notrufannahmestelle übertragen werden oder über die zweite Kommunikationsverbindung an die Basisstation und von dort über die erste Kommunikationsverbindung an die Notrufannahmestelle übertragen werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten oder Elemente, welche gleiche oder analoge Funktionen ausführen.

### Kurze Beschreibung der Zeichnungen

Figur 1 zeigt ein schematisches Blockdiagramm eines ersten Ausführungsbeispiels eines erfindungsgemäßen Hausnotrufgerätes.

Figur 2 zeigt ein schematisches Blockdiagramm eines zweiten Ausführungsbeispiels eines erfindungsgemäßen Hausnotrufgerätes.

Ausführungsformen der Erfindung

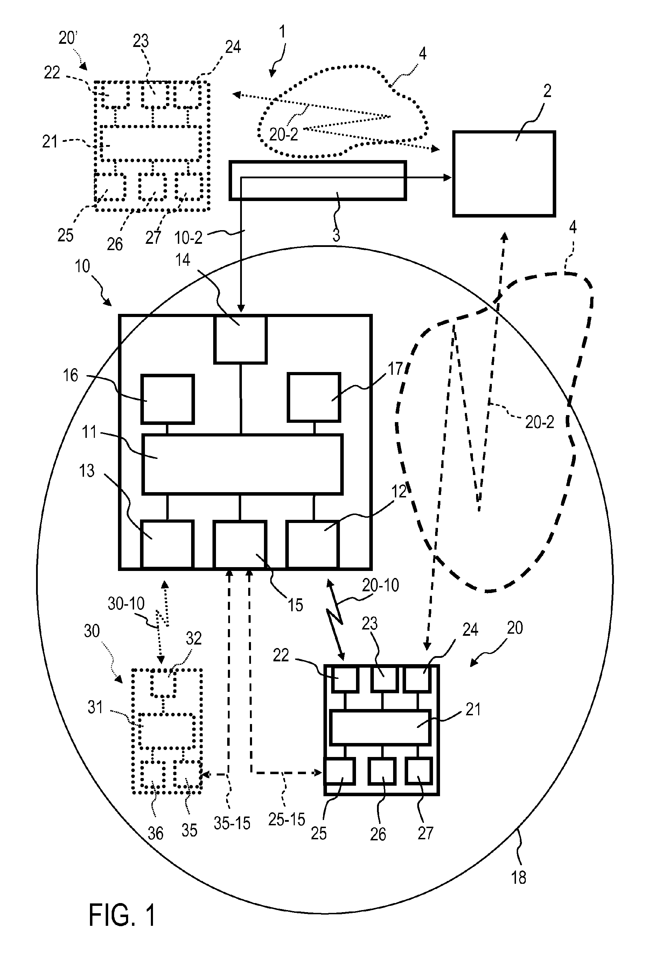

Wie aus Fig. 1 ersichtlich ist, umfasst ein erstes Ausführungsbeispiel eines Hausnotrufgerätes 1 zur Übertragung eines Notrufs an eine vorgegebene Notrufannahmestelle 2 eine Basisstation 10 und ein als Mobilfunkteil ausgeführtes Mobilteil 20. Wie aus Fig. 1 weiter ersichtlich ist, umfasst die Basisstation 10 eine Auswerte- und Steuereinheit 11 zur Steuerung der Funktionen der Basisstation 10, drei Schnittstelleneinheiten 12, 13, 14 eine Eingabeeinheit 16, die mindestens ein manuelles Eingabemittel in Form einer Notruftaste und ein akustisches Eingabemittel in Form eines Mikrofons aufweist, und eine Ausgabeeinheit 17, die eine optische Ausgabeeinheit in Form eines Displays und eine akustische Ausgabeeinheit in Form eines Lautsprechers aufweist. Wie aus Fig. 1 weiter ersichtlich ist, umfasst das als Mobilfunkteil ausgeführte Mobilteil 20 eine Auswerte- und Steuereinheit 21 zur Steuerung der Funktionen des Mobilteils 20, zwei Schnittstelleneinheiten 22, 24, eine Ortungseinheit 23 zur Bestimmung einer aktuellen geografischen Position des Mobilteils 20, eine Energieversorgungseinheit 25, eine Eingabeeinheit 26, die mindestens ein manuelles Eingabemittel in Form einer Notruftaste und ein akustisches Eingabemittel in Form eines Mikrofons aufweist, und eine Ausgabeeinheit 27, die eine optische Ausgabeeinheit in Form eines Displays und eine akustische Ausgabeeinheit in Form eines Lautsprechers aufweist.

Im dargestellten ersten Ausführungsbeispiel kann eine erste Kommunikationsverbindung 10-2 zur Übertragung eines ausgelösten Notrufs in einem als Festnetz ausgeführten ersten Telekommunikationsnetz 3 zwischen einer in der Basisstation 10 angeordneten ersten Schnittstelleneinheit 14 und einer korrespondierenden nicht dargestellten Schnittstelleneinheit in der Notrufannahmestelle 2 drahtgebunden aufgebaut werden. Zusätzlich oder alternativ kann eine gestrichelt dargestellte erste Kommunikationsverbindung 20-2 zur Übertragung eines ausgelösten Notrufs in einem als Funknetz ausgeführten zweiten Telekommunikationsnetz 3 zwischen einer im Mobilteil 20 angeordneten zweiten Schnittstelleneinheit 24 und einer korrespondierenden nicht dargestellten Schnittstelleneinheit in der Notrufannahmestelle 2 drahtlos aufgebaut werden. Die Basisstation 10 kann über eine zweite Kommunikationsverbindung 20-10, die eine kurze Reichweite von ca. 50m bis 350m aufweist und zwischen der Schnittstelleneinheit 12 der Basisstation 10 und der Schnittstelleneinheit 22 des Mobilteils 20 aufgebaut wird, mit dem Mobilteil 20 kommunizieren. Ein Notruf kann von der Basisstation 10 und/oder vom Mobilteil 20 ausgelöst werden, beispielsweise durch eine entsprechende Eingabe über die Eingabeeinheit 16 in der Basisstation bzw. über die Eingabeeinheit 26 im Mobilteil 20, wobei ein im Mobilteil 20 ausgelöster Notruf über die zweite Kommunikationsverbindung 20-10 zur Basisstation 10 übertragen wird. Alternativ kann ein Notruf auf bekannte Weise durch Vorgabe von Kriterien automatisch ausgelöst werden, wenn beispielsweise auf eine entsprechende optische, akustische oder haptische Ausgabe keine Quittierung durch den Benutzer erfolgt usw. Im dargestellten Ausführungsbeispiel ist die zweite Schnittstelleneinheit 24 im Mobilteil 20 blockiert, wenn das Mobilteil 20 in einem Fangbereich 18 der Basisstation 10 angeordnet ist, in welchem die zweite Kommunikationsverbindung 20-10 zwischen dem Mobilteil 20 und der Basisstation 10 hergestellt werden kann. Ist das Mobilteil 20' außerhalb des Fangbereichs 18 der Basisstation 10 angeordnet, was durch das gepunktet gezeichnete Mobilteil 20' dargestellt wird, dann ist die zweite Schnittstelleneinheit 24 freigegeben, da keine zweite Kommunikationsverbindung 20-10 zwischen dem Mobilteil 20 und der Basisstation 10 hergestellt werden kann. Der Fangbereich 18 der Basisstation weist beispielsweise eine Reichweite von ca. 50m bis 350m auf.

Bei einem ausgelösten Notruf beginnt die Basisstation 10 über die ersten Schnittstelleneinheit 14 den Aufbau der ersten Kommunikationsverbindung 10-2 zur Notrufannahmestelle 2 im ersten Telekommunikationsnetz 3. In Reaktion auf eine Nichtzustandkommen der ersten Kommunikationsverbindung 10-2 im ersten Telekommunikationsnetz 3 aktiviert die Basisstation 10 über die zweite Kommunikationsverbindung 20-10 die zweite Schnittstelleneinheit 24 und beginnt den Aufbau der ersten Kommunikationsverbindung 20-2 zur Notrufannahmestelle 2 im zweiten Telekommunikationsnetz 4. Wenn die erste Kommunikationsverbindung 20-2 im zweiten Telekommunikationsnetz 4 aufgebaut werden kann, überträgt die Basisstation 10 den ausgelösten Notruf über die zweite Schnittstelleneinheit 24 im Mobilteil und das zweite Telekommunikationsnetz 4, wobei zusätzliche eine Sprechverbindung hergestellt werden kann. Kann die erste Kommunikationsverbindung 20-2 zur Notrufannahmestelle 2 auch im zweiten Telekommunikationsnetz 4 nicht hergestellt werden, dann versucht die Basisstation einen neuen Aufbau der ersten Kommunikationsverbindung 10-2 im ersten Telekommunikationsnetz 3, wobei die beschriebenen Vorgänge solange wiederholt werden, bis die erste Kommunikationsverbindung 10-2, 20-2 zur Notrufannahmestelle 2 aufgebaut werden kann, oder bis der ausgelöste Notruf manuell von einem Benutzer deaktiviert wird.

Bei einer Auslösung des Notrufs im Mobilteil 20 überträgt das Mobilteil 20 den ausgelösten Notruf über die zweite Kommunikationsverbindung 20-10 an die Basisstation 10, wenn sich das Mobilteil 20 innerhalb des Fangbereichs 18 der Basisstation 10 befindet, und die Basisstation versucht den oben beschriebenen Aufbau der ersten Kommunikationsverbindung 10-2 bzw. 20-2 zur Übertragung des Notrufs an die Notrufannahmestelle 2. Über die zweite Kommunikationsverbindung können neben der Notrufübertragung auch Informationen von weiteren Funktionen wie Überwachung der Energieversorgung im Mobilteil 20, 20' oder Ortung des Mobilteils 20, 20' übertragen werden. Ist das Mobilteil 20' außerhalb des Fangbereichs 18 der Basisstation 10 angeordnet, dann beginnt die Auswerte- und Steuereinheit 11 des Mobilteils 20' mit dem Aufbau der gepunktet dargestellten ersten Kommunikationsverbindung 20-2 in dem als Funknetz ausgeführten zweiten Telekommunikationsnetz 4. Zudem können die Mobilteile 20, 20' über die Ortungseinheit 23 jeweils ihre aktuelle geografische Position bestimmten und diese mit dem ausgelösten Notruf über die ersten Kommunikationsverbindung 20-2 direkt an die Notrufannahmestelle 2 übertragen. Zudem kann die bestimmte geografische Position des Mobilteils 20 auch über die zweite Kommunikationsverbindung 20-10 an die Basisstation 10 und von dort über die erste Kommunikationsverbindung 10-2 im ersten Telekommunikationsnetz 3 an die Notrufannahmestelle 2 übertragen werden, wenn sich das Mobilteil 20 innerhalb des Fangbereichs 18 der Basisstation 10 befindet.

Wie aus Fig. 1 weiter ersichtlich ist, kann ein Notruf über ein zusätzliches als Handsender ausgeführtes Mobilteil 30 ausgelöst werden, welches eine Schnittstelleneinheit 32, eine Auswerte- und Steuereinheit 31 zur Steuerung der Funktionen des Handsenders 30, eine Energieversorgungseinheit 35 und eine Eingabeeinheit 36 aufweist. Zusätzliche kann das als Handsender ausgeführte Mobilteil 30 nicht dargestellte Ausgabemittel umfassen, die beispielsweise als Display oder Lautsprecher ausgeführt sind. Ein im Handsender ausgelöster Notruf wird von der Schnittstelleneinheit 32 über eine weitere zweite Kommunikationsverbindung 30-10, die eine kurze Reichweite aufweist, an die korrespondierende Schnittstelleneinheit 13 in der Basisstation 10 übertragen. Der Aufbau der korrespondierenden ersten Kommunikationsverbindung 10-2 bzw. 20-2 zur Übertragung des ausgelösten Notrufs an die Notrufannahmestelle 2 erfolgt gemäß den oben gemachten Ausführungen.

Die Basisstation 10 kann nicht dargestellte mechanische Aufnahmevorrichtungen aufweisen, in welche die tragbaren Mobilteile 20, 20', 30 eingelegt werden können. In den mechanischen Aufnahmevorrichtungen können Mittel vorgesehen werden, um eine elektrische Verbindung zwischen der Basisstation 10 und dem jeweiligen Mobilteil 20, 20', 30 herzustellen. Diese elektrische Verbindung kann beispielsweise als drahtlose und/oder drahtgebundene Energieversorgungsverbindung 25-15, 35-15 ausgeführt werden, so dass die in der Basisstation 10 angeordnete Ladeeinheit 15 die Energieversorgungseinheit 25, 35 des korrespondierenden Mobilteils 20, 20', 30 aufladen kann.

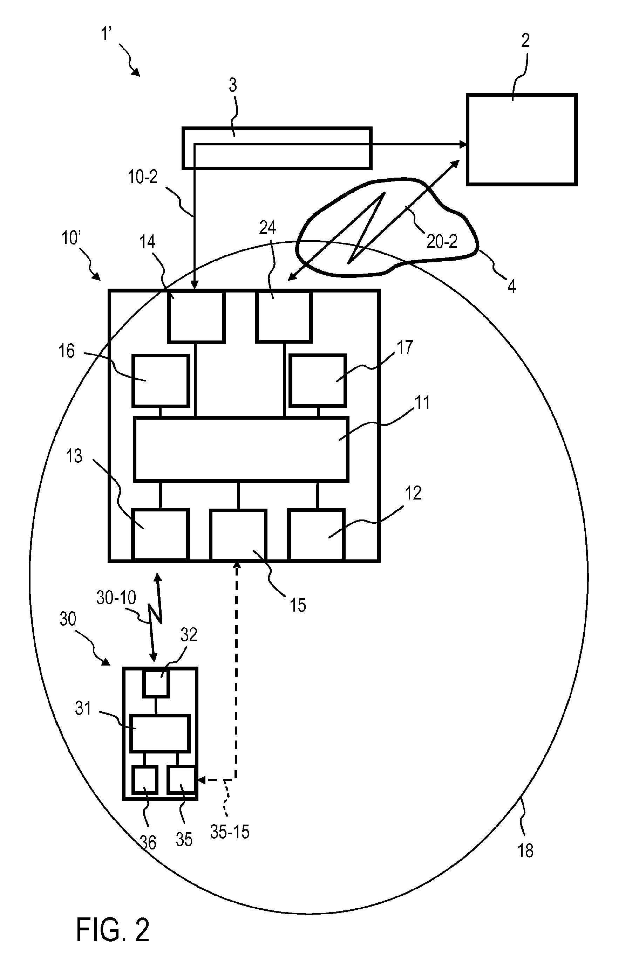

Wie aus Fig. 2 ersichtlich ist, umfasst ein zweites Ausführungsbeispiel eines Hausnotrufgerätes 1' zur Übertragung eines Notrufs an eine vorgegebene Notrufannahmestelle 2 eine Basisstation 10' und ein als Handsender ausgeführtes Mobilteil 30. Wie aus Fig. 2 weiter ersichtlich ist, umfasst die Basisstation 10' analog zur Basisstation 10 des ersten Ausführungsbeispiels eine Auswerte- und Steuereinheit 11, drei Schnittstelleneinheiten 12, 13, 14 eine Eingabeeinheit 16 und eine Ausgabeeinheit 17. Zusätzlich umfasst die Basisstation 10' des zweiten Ausführungsbeispiels die zweite Schnittstelleneinheit 24, welche die erste Kommunikationsverbindung 20-2 zur Notrufannahmestelle 2 in einem zweiten als Funknetz ausgeführten Telekommunikationsnetz 4 aufbauen kann.

Wie aus Fig. 2 weiter ersichtlich ist, umfasst das als Handsender ausgeführte Mobilteil 30 analog zum Handsender 30 in Fig. 1 eine Schnittstelleneinheit 32, eine Auswerte- und Steuereinheit 31 zur Steuerung der Funktionen des Handsenders 30, eine Energieversorgungseinheit 35 und eine Eingabeeinheit 36. Zusätzlich kann das als Handsender ausgeführte Mobilteil 30 nicht dargestellte Ausgabemittel umfassen, die beispielsweise als Display oder Lautsprecher ausgeführt sind. Analog zu den Ausführungen zu Fig. 1 kann die Energieversorgungseinheit des als Handsender ausgeführten Mobilteils 30 über eine als drahtlose und/oder drahtgebundene Energieversorgungsverbindung 35-15 ausgeführte elektrische Verbindung von der in der Basisstation 10 angeordneten Ladeeinheit 15 aufgeladen werden.

Analog zum ersten Ausführungsbeispiel gemäß Fig. 1 kann im dargestellten zweiten Ausführungsbeispiel eine erste Kommunikationsverbindung 10-2 zur Übertragung eines ausgelösten Notrufs in einem als Festnetz ausgeführten ersten Telekommunikationsnetz 3 zwischen der in der Basisstation 10 angeordneten ersten Schnittstelleneinheit 14 und einer korrespondierenden nicht dargestellten Schnittstelleneinheit in der Notrufannahmestelle 2 drahtgebunden aufgebaut werden. Zusätzlich oder alternativ kann die erste Kommunikationsverbindung 20-2 zur Übertragung eines ausgelösten Notrufs in einem als Funknetz ausgeführten zweiten Telekommunikationsnetz 4 zwischen der ebenfalls in der Basisstation 10 angeordneten zweiten Schnittstelleneinheit 24 und einer korrespondierenden nicht dargestellten Schnittstelleneinheit in der Notrufannahmestelle 2 drahtlos aufgebaut werden. Die Basisstation 10 kann über die zweite Kommunikationsverbindung 30-10, die eine kurze Reichweite von ca. 50m bis 350m aufweist und zwischen der Schnittstelleneinheit 13 der Basisstation 10 und der Schnittstelleneinheit 32 des als Handsender ausgeführten Mobilteils 30 aufgebaut wird, mit dem als Handsender ausgeführten Mobilteil 30 kommunizieren. Ein Notruf kann von der Basisstation 10 und/oder vom Mobilteil 30 ausgelöst werden, beispielsweise durch eine entsprechende Eingabe über die Eingabeeinheit 16 in der Basisstation bzw. die Eingabeeinheit 36 im Mobilteil 30, wobei ein im Mobilteil 30 ausgelöster Notruf über die zweite Kommunikationsverbindung 30-10 zur Basisstation 10 übertragen wird. Der Aufbau der korrespondierenden ersten Kommunikationsverbindung 10-2 bzw. 20-2 zur Übertragung des ausgelösten Notrufs erfolgt dann in der Basisstation 10' über die erste Schnittstelleneinheit 14 oder die zweite Schnittstelleneinheit 24.

Bei einem ausgelösten Notruf beginnt die Basisstation 10 über die ersten Schnittstelleneinheit 14 den Aufbau der ersten Kommunikationsverbindung 10-2 zur Notrufannahmestelle 2 im ersten Telekommunikationsnetz 3. In Reaktion auf eine Nichtzustandkommen der ersten Kommunikationsverbindung 10-2 im ersten Telekommunikationsnetz 4 aktiviert die Basisstation 10 die zweite Schnittstelleneinheit 24 und beginnt den Aufbau der ersten Kommunikationsverbindung 20-2 zur Notrufannahmestelle 2 im zweiten Telekommunikationsnetz 4. Wenn die erste Kommunikationsverbindung 10-2 im zweiten Telekommunikationsnetz 4 aufgebaut werden kann, überträgt die Basisstation 10 den ausgelösten Notruf über die zweite Schnittstelleneinheit 24 und das zweite Telekommunikationsnetz 4, wobei zusätzliche eine Sprechverbindung hergestellt werden kann. Kann die erste Kommunikationsverbindung 20-2 zur Notrufannahmestelle 2 auch im zweiten Telekommunikationsnetz 4 nicht hergestellt werden, dann versucht die Basisstation einen neuen Aufbau der ersten Kommunikationsverbindung 10-2 im ersten Telekommunikationsnetz 3, wobei die beschriebenen Vorgänge solange wiederholt werden, bis die erste Kommunikationsverbindung 10-2, 20-2 zur Notrufannahmestelle 2 aufgebaut werden kann, oder die Notrufauslösung deaktiviert wird.

Wie aus Fig. 2 weiter ersichtlich ist, können über die Schnittstelleneinheit 12 weitere nicht dargestellte zweite Kommunikationsverbindungen mit nicht dargestellten als Mobilfunkteile ausgeführten Mobilteilen hergestellt werden, so dass anlog zum ersten Ausführungsbeispiel bei Bedarf weitere erste Kommunikationsverbindungen in als Funknetze ausgeführten Telekommunikationsnetzen aufgebaut werden können.

Das erfindungsgemäße Hausnotrufgerät bietet durch die Nutzung von mehreren Telekommunikationsnetzen in vorteilhafter Weise redundante Übertragungswege vom Hausnotrufgerät zur Notrufannahmestelle an. Bei Ausführung der Schnittstelleneinheiten in Modulbauweise kann die Basisstation beliebig zur Kommunikation mit als Handsendern ausgeführten Mobilteilen und/oder mit als Mobilfunksendern ausgeführten Mobilteilen angepasst werden. Zudem kann die Basisstation, welche die erste Kommunikationsverbindung in einem als Festnetz ausgeführten ersten Telekommunikationsnetz aufbaut, durch die modulare Ausführung in vorteilhafter Weise einfach mit Einheiten zum Aufbau einer ersten Kommunikationsverbindung in einem als Funknetz ausgeführten Telekommunikationsnetz nachgerüstet werden. Die Auslösung des Notrufs erfolgt in bekannter Weise in Abhängigkeit von vorgegebenen Auslösekriterien oder durch eine entsprechende manuelle Betätigung einer als Notruftaste ausgeführten Eingabeeinheit.

## Patentansprüche

1. Hausnotrufgerät zur Übertragung eines Notrufs über eine erste Kommunikationsverbindung (10-2, 20-2) an mindestens eine vorgegebene Notrufannahmestelle (2) mit einer Basisstation (10, 10') und mindestens einem Mobilteil (20, 20', 30), wobei die Basisstation (10, 10') über mindestens eine zweite Kommunikationsverbindung (20-10, 30-10) mit dem mindestens einen Mobilteil (20, 20', 30) kommuniziert, wobei der Notruf von der Basisstation und/oder von dem mindestens einen Mobilteil (20, 20', 30) auslösbar ist, und wobei über die zweite Kommunikationsverbindung (20-10, 30-10) ein im Mobilteil ausgelöster Notruf oder andere Informationen zur Basisstation (10, 10') übertragbar sind, **dadurch gekennzeichnet, dass** die erste Kommunikationsverbindung (10-2, 20-2) zwischen dem Hausnotrufgerät (1) und der mindestens einen vorgegebenen Notrufannahmestelle in Reaktion auf den ausgelösten Notruf redundant in mindestens zwei Telekommunikationsnetzen (3, 4) aufbaubar ist.

2. Hausnotrufgerät nach Anspruch 1, **dadurch gekennzeichnet, dass** eine erste Schnittstelleneinheit (14) den Aufbau der ersten Kommunikationsverbindung (10-2) in einem ersten Telekommunikationsnetz (3) beginnt, wobei eine zweite Schnittstelleneinheit (24) in Reaktion auf eine Nichtzustandkommen der ersten Kommunikationsverbindung (10-2) im ersten Telekommunikationsnetz (3) den Aufbau der ersten Kommunikationsverbindung (20-2) in einem zweiten Telekommunikationsnetz (4) beginnt.

3. Hausnotrufgerät nach Anspruch 2, **dadurch gekennzeichnet, dass** das erste Telekommunikationsnetz (3) als Festnetz ausgeführt ist, wobei die erste Schnittstelleneinheit (14) die erste Kommunikationsverbindung (10-2) drahtgebunden in dem als Festnetz ausgeführten ersten Telekommunikationsnetz (3) aufbaut.

4. Hausnotrufgerät nach Anspruch 2 oder 3, **dadurch gekennzeichnet, dass** das zweite Telekommunikationsnetz (4) als Funknetz ausgeführt ist, wobei die zweite Schnittstelleneinheit (24) die erste Kommunikationsverbindung (20-2) drahtlos in dem als Funknetz ausgeführten zweiten Telekommunikationsnetz (4) aufbaut.

5. Hausnotrufgerät nach einem der Ansprüche 2 bis 4, **dadurch gekennzeichnet, dass** die erste Schnittstelleneinheit (14) und die zweite Schnittstelleneinheit (24) in der Basisstation (10') angeordnet sind.

6. Hausnotrufgerät nach einem der Ansprüche 2 bis 4, **dadurch gekennzeichnet, dass** die erste Schnittstelleneinheit (14) in der Basisstation (10) angeordnet ist, und die zweite Schnittstelleneinheit (24) im Mobilteil (20) angeordnet ist.

7. Hausnotrufgerät nach Anspruch 6, **dadurch gekennzeichnet, dass** die zweite Schnittstelleneinheit (24) im Mobilteil (20) blockiert ist, wenn das Mobilteil (20) in einem Fangbereich (18) der Basisstation (10) angeordnet ist und eine zweite Kommunikationsverbindung (20-10) zwischen dem Mobilteil (20) und der Basisstation (10) herstellbar ist, wobei die zweite Schnittstelleneinheit (24) im Mobilteil (20') freigegeben ist, wenn das Mobilteil (20') außerhalb des Fangbereichs der Basisstation (10) angeordnet ist und keine zweite Kommunikationsverbindung (20-10) zwischen dem Mobilteil (20) und der Basisstation (10) herstellbar ist.

8. Hausnotrufgerät nach einem der Ansprüche 1 bis 7, **dadurch gekennzeichnet, dass** die mindestens eine zweite Kommunikationsverbindung (20-10, 30-10) über eine drahtlose und/oder drahtgebundene Schnittstelleneinheit (12, 13) herstellbar ist.

9. Hausnotrufgerät nach einem der Ansprüche 1 bis 8, **dadurch gekennzeichnet, dass** eine in der Basisstation (10, 10') angeordneten Ladeeinheit (15) eine Energieversorgungseinheit (25, 35) des mindestens einen Mobilteils (20, 20', 30) über eine drahtlose und/oder drahtgebundene Energieversorgungsverbindung (25-15, 35-15) auflädt.

10. Hausnotrufgerät nach einem der Ansprüche 1 bis 9, **dadurch gekennzeichnet, dass** das mindestens eine Mobilteil (20, 20') eine Ortungseinheit (23) zur Bestimmung einer aktuellen geografischen Position umfasst, wobei die bestimmte aktuelle geografische Position mit dem ausgelösten Notruf über die ersten Kommunikationsverbindung (20-2) direkt an die Notrufannahmestelle (2) übertragbar ist oder über die zweite Kommunikationsverbindung (20-10) an die Basisstation (10) und von dort über die erste Kommunikationsverbindung (10-2) an die Notrufannahmestelle (2) übertragbar ist.
